(19) Europäisches Patentamt / European Patent Office / Office européen des brevets

(11) **EP 2 871 767 A2**

(12) **EUROPEAN PATENT APPLICATION**

(43) Date of publication:
**13.05.2015 Bulletin 2015/20**

(51) Int Cl.:
***H02M 7/5387*** (2007.01)

(21) Application number: **14192465.4**

(22) Date of filing: **10.11.2014**

<table>
<tr><td>(84) Designated Contracting States:<br><b>AL AT BE BG CH CY CZ DE DK EE ES FI FR GB<br>GR HR HU IE IS IT LI LT LU LV MC MK MT NL NO<br>PL PT RO RS SE SI SK SM TR</b><br>Designated Extension States:<br><b>BA ME</b><br><br>(30) Priority: <b>12.11.2013 GB 201319921</b><br><br>(71) Applicant: <b>Control Techniques Ltd<br>Newtown, Powys SY16 3BE (GB)</b></td><td>(72) Inventors:<br>• <b>Hart, Simon David<br>Newtown, Powys SY16 3BE (GB)</b><br>• <b>Webster, Antony John<br>Newtown, Powys SY16 3BE (GB)</b><br><br>(74) Representative: <b>Hibbert, Juliet Jane Grace et al<br>Kilburn & Strode LLP<br>20 Red Lion Street<br>London WC1R 4PJ (GB)</b></td></tr>
</table>

(54) **Modulation of Switching Signals in Power Inverters**

(57)    A method of driving a power conversion system is provided, the power conversion system comprising a DC source and an inverter coupled to the DC source and configured to receive DC power from the DC source, the inverter comprising one or more AC terminals for supplying AC power at an output frequency and an inverter switching network comprising a plurality of inverter switches for converting the DC power to the AC power. The method comprises: applying control signals to the inverter switching network in accordance with a selected switching sequence, wherein a switching sequence is applied corresponding to a desired sector of a switching scheme in which a demand vector is currently located, the switching scheme corresponding to the demand vector in a space vector modulation scheme having stationary active vectors around the periphery and a stationary zero vector at an origin; storing a plurality of simultaneous switching schemes in which, for a single switching cycle, a switch in each of at least two phases of the inverter switching network is switched simultaneously from a first state to a second state with a corresponding switch in at least one other phase of the inverter switching network being in a given state and in which the switch in each of the at least two phases is switched simultaneously from the second state to the first state with the switch in the at least one other phase being in the given state; and at low output frequency, applying a simultaneous switching sequence by applying a first of the simultaneous switching schemes in dependence on the position of the demand vector in relation to the stationary active vectors. A corresponding power conversion system and switch controller for a power conversion system are also provided.

Fig. 9

**Description**

**Field**

The present disclosure relates to a method and control system for controlling a power converter by modulating switching signals in a switching device of the power converter.

**Background**

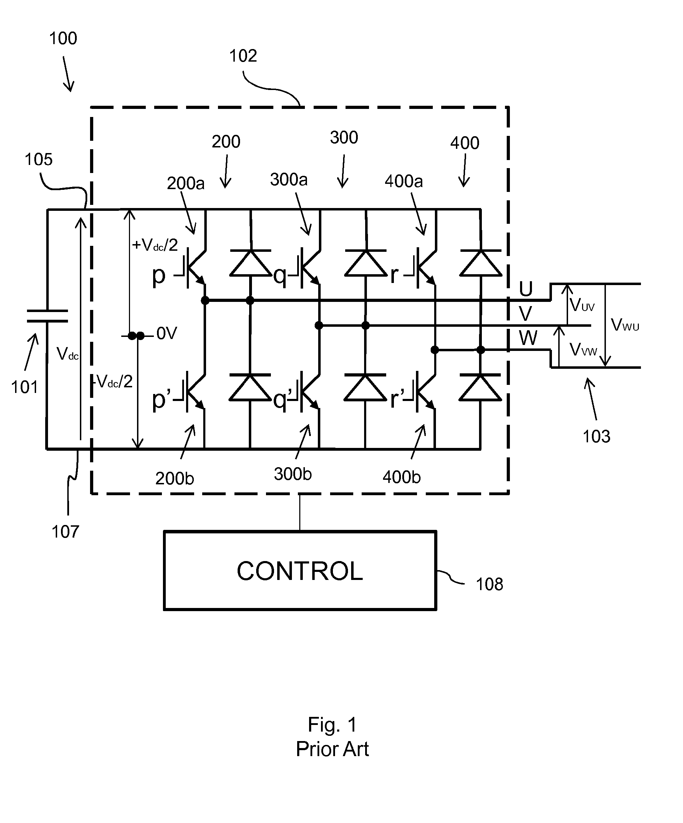

Figure 1 shows a well-known three phase power inverter 100 for converting a DC power supply 101 to an AC output 103 which may then be connected to a load (not shown). The inverter comprises an inverter switching network 102 comprising three separate phases 200, 300, 400 (also referred to as phases U, V, W respectively). Each phase includes two switches in series: 200a, 200b in phase 200/U; 300a, 300b in phase 300/V; and 400a, 400b in phase 400/W. Switches 200a, 300a and 400a are connected to the positive rail 105 (and may be referred to as the "upper" switches) and switches 200b, 300b and 400b are connected to the negative rail 107 (and may be referred to as the "lower" switches). In Figure 1, each switch is an IGBT (insulated gate bipolar transistor) and, for each IGBT, an associated anti-parallel diode is also shown. However, any switches with fast switching capability may be used. A control system 108 (such as a processor) provides drive signals p, q, r (and the inverse p', q' r') to control the switching of the switches 200a, 200b, 300a, 300b, 400a, 400b to control the AC output of the inverter 100. An example is shown in US2012/0075892.

A sinusoidal output current can be created at AC output 103 by a combination of switching states of the six switches. However, the inverter 100 must be controlled so that the two switches in the same phase are never switched on at the same time, so that the DC supply 101 is not short circuited. Thus, if 200a is on, 200b must be off and vice versa; if 300a is on, 300b must be off and vice versa; and if 400a is on, 400b must be off and vice versa. This results in eight possible switching vectors for the inverter, as shown in Table 1. In Table 1, the vector values are the states of the three upper switches 200a, 300a, 400a, with the three lower switches 200b, 300b, 400b necessarily taking the opposite state to avoid shorting out the DC supply.

**Table 1**

| Vector | 200a | 300a | 400a | 200b | 300b | 400b | $V_{UW}$ | $V_{WV}$ | $V_{VU}$ | |
|---|---|---|---|---|---|---|---|---|---|---|
| $V_0=\{000\}$ | OFF | OFF | OFF | ON | ON | ON | 0 | 0 | 0 | Zero |
| $V_1=\{100\}$ | ON | OFF | OFF | OFF | ON | ON | $+V_{dc}$ | 0 | $-V_{dc}$ | Active |
| $V_2=\{110\}$ | ON | ON | OFF | OFF | OFF | ON | 0 | $+V_{dc}$ | $-V_{dc}$ | Active |
| $V_3=\{010\}$ | OFF | ON | OFF | ON | OFF | ON | $-V_{dc}$ | $+V_{dc}$ | 0 | Active |
| $V_4=\{011\}$ | OFF | ON | ON | ON | OFF | OFF | $-V_{dc}$ | 0 | $+V_{dc}$ | Active |
| $V_5=\{001\}$ | OFF | OFF | ON | ON | ON | OFF | 0 | $-V_{dc}$ | $+V_{dc}$ | Active |
| $V_6=\{101\}$ | ON | OFF | ON | OFF | ON | OFF | $+V_{dc}$ | $-V_{dc}$ | 0 | Active |
| $V_7=\{111\}$ | ON | ON | ON | OFF | OFF | OFF | 0 | 0 | 0 | Zero |

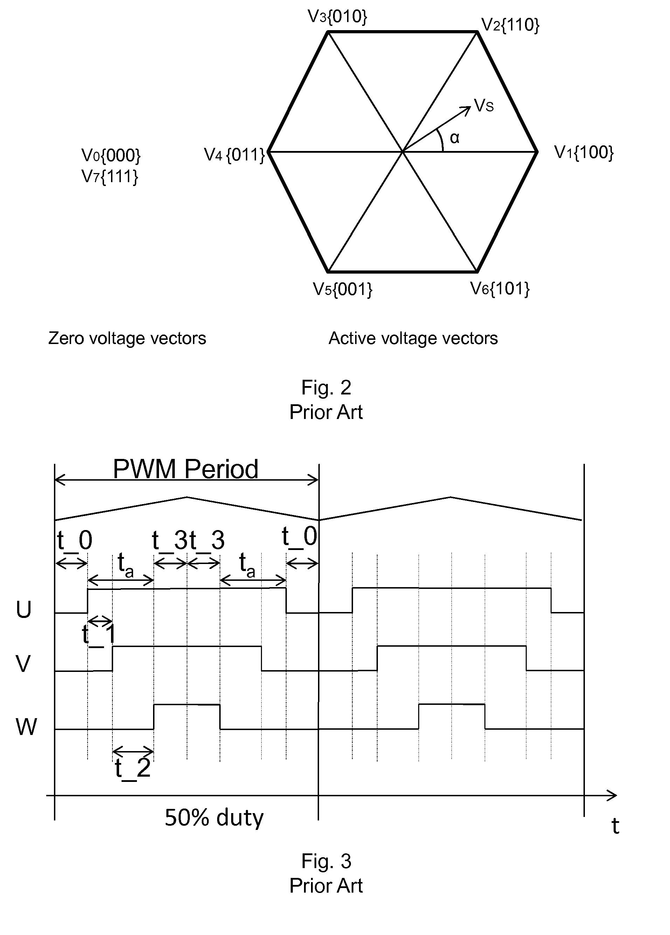

Figure 2 shows the six active vectors and the two zero voltage vectors of Table 1 graphically portrayed in an inverter voltage switching hexagon. Such vectorial representation of three-phase systems is well known to the skilled person and will not be described in detail. However, in general, any voltage in a three-phase system can be represented uniquely by a rotating vector $V_S$, as shown in Figure 2. The rotating vector $V_S$ comprises components of the six active vectors shown in Table 1 and Figure 2. This is known as Space Vector Modulation (SWM). The voltage at the AC output 103 can be changed by varying the ratio between the zero voltage vectors $V_0$ and $V_7$ and the active vector $V_S$ (comprising components of $V_1$ to $V_6$) (the modulation index) by pulse width modulation (PWM) techniques. The object of SVM is to approximate the desired voltage vector $V_S$ by a combination of the eight switching vectors. One way to approximate is to control the average output of the inverter (in a small time period t) to be the same as the average desired output voltage in the same period. So, for $V_S$ shown in Figure 2 (between $V_1$ and $V_2$) switching vectors $V_1$ and $V_2$ are applied within the period t for respective durations of time.

Figure 3 shows an example of a pulse width space vector modulation switch control timing pattern over two PWM switching periods according to the prior art. The switching function for each upper switch 200a, 300a, 400a is a time waveform taking the value 1 when the upper switch is on and 0 when the upper switch is off (as will be appreciated, the switching function for each lower switch 200b, 300b, 400b will be the inverse of the corresponding upper switch) with dead-time included to prevent short circuiting. Thus a low represents the lower switch for the phase (e.g 200b, 300b, 400b) being ON and a high represents the upper switch for the phase (e.g 200a, 300a, 400a) being ON (neglecting dead-time protection). Referring to Figure 3, during the first period t_0, all three upper switches 200a, 300a, 400a are off (value 0) which produces vector $V_0$ of Table 1. $V_0$ is a zero voltage vector, so this time period t_0 is an inactive period. In the second period t_1, switch 200a takes the value 1 and switches 300a and 400a take the value 0, which produces vector $V_1$, which is an active vector. In the third period t_2, switches 200a and 300a take the value 1 and switch 400a takes the value 0, which produces vector $V_2$, which is also an active vector. Finally, during the fourth period t_3, all three upper switches 200a, 300a, 400a are on (value 1) which produces zero voltage vector $V_7$ of Table 1. Thus, the active period $t_a$ of a switching cycle is t_1 and t_2 and the inactive period $t_i$ of a switching cycle is t_0 and t_3. The ratio between the total active period $t_a$ (in this case, t_1 + t_2) and total inactive period $t_i$ (in this case, t_0 + t_3 = $t_i$) determines the average output voltage at the AC output. Figure 3 shows a 50% duty cycle (i.e. 50% active) as an example. Other duty cycles may be operative.

Figure 3 shows a typical space vector modulation (SVM) timing pattern for two PWM periods, with symmetric switching (i.e. t_0 =t_3). The ratio of t_0 and t_3 as shown in Figure 3 is one to one.

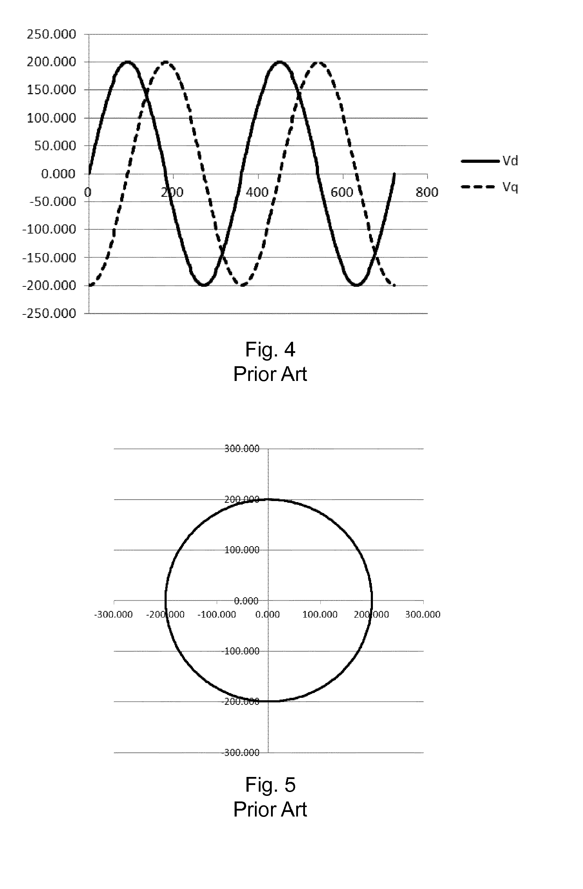

Figure 4 shows D and Q axis components of the desired output voltage for two voltage output wave cycles versus output voltage angle. Figure 5 shows D and Q axis components of the desired output voltage as plotted on the X and Y axis for one cycle of the output voltage wave.

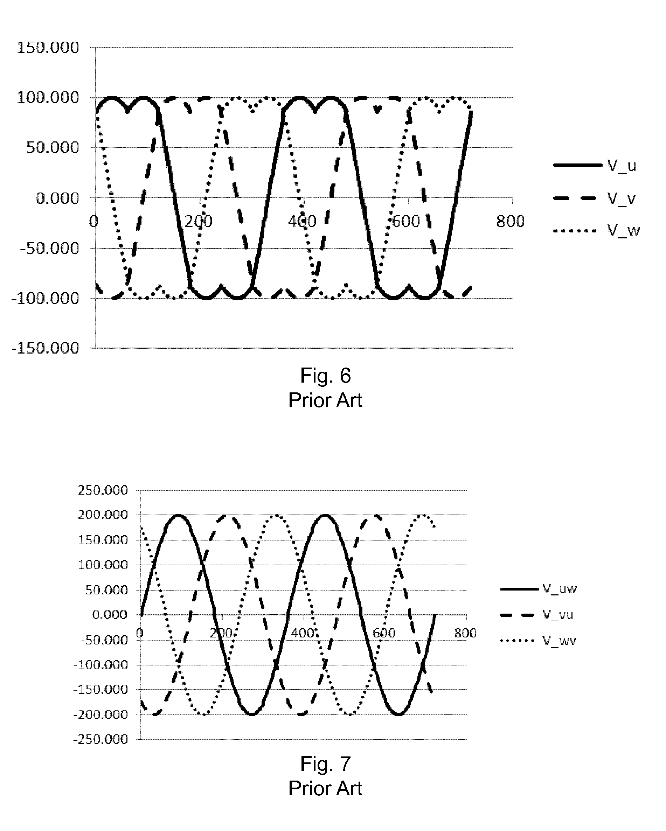

Figure 6 shows phase voltages Vu, Vv and Vw (with respect to the 0V line shown in Figure 1, which is half of the dc bus) with symmetric switching (t_0 = t_3) versus output voltage angle (with a dc bus of 250V and a 200VII peak demand). Figure 7 shows the resulting line to line voltages V_uw, V_vu and V_wv as seen by the motor load.

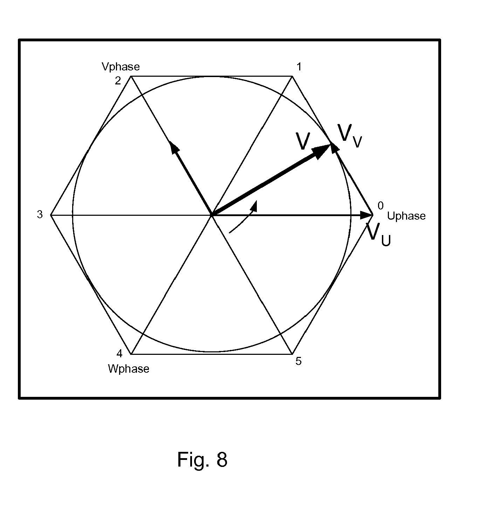

Figure 8 shows a D,Q plot showing the per phase vector voltages Vu, Vv and Vw and resulting vector V (in bold) when the U phase upper IGBT has a much higher conduction time than the other IGBTs, for instance as in the switch control timing pattern shown in Figure 3. Figure 8 shows how the per phase voltage vectors Vu, Vv, and Vw result in a vector V at 30 degrees. Notice that the W phase has zero voltage and that the U phase is providing much more voltage (conduction time) than the V phase. This may result in stresses on the switches of the inverter switching network 102.

At low output frequencies (such as output frequencies less than around 2Hz) the switch control timing patterns change relatively slowly and the temperature of each individual switch 200a, 200b, 300a, 300b, 400a, 400b can become excessive even if the current delivered by the drive is less than the inverter rated output current as each individual switch may be on for a period of time sufficient to cause excessive temperature of the switch.

Because of this, and other, problems, the control of switching power converters is an area of increasing interest.

It is an object of the described technique to provide an improved method and control system for a power converter.

## Summary

A method of driving a power conversion system is provided, the power conversion system comprising a DC source and an inverter coupled to the DC source and configured to receive DC power from the DC source, the inverter comprising one or more AC terminals for supplying AC power at an output frequency and an inverter switching network comprising a plurality of inverter switches for converting the DC power to the AC power. According to an embodiment, the method comprises: applying control signals to the inverter switching network in accordance with a selected switching sequence, wherein a switching sequence is applied corresponding to a desired sector of a switching scheme in which a demand vector is currently located, the switching scheme corresponding to the demand vector in a space vector modulation scheme having stationary active vectors around the periphery and a stationary zero vector at an origin; storing a plurality of simultaneous switching schemes in which, for a single switching cycle, a switch in each of at least two phases of the inverter switching network is switched substantially simultaneously from a first state to a second state with a corresponding switch in at least one other phase of the inverter switching network being in a given state and in which the switch in each of the at least two phases is switched substantially simultaneously from the second state to the first state with the switch in the at least one other phase being in the given state; and at low output frequency, applying a simultaneous switching sequence by applying a first of the simultaneous switching schemes in dependence on the position of the demand vector in relation to the stationary active vectors.

The magnitudes of the voltages in each phase may be the same for a given simultaneous switching scheme but may differ between simultaneous switching schemes.

At low output frequency, a simultaneous switching sequence may be applied by applying a first and a second of the simultaneous switching schemes in dependence on the position of the demand vector in relation to the stationary active vectors. The method may further comprise alternating between the first and the second simultaneous switching schemes. A sequence of application of the first and second simultaneous switching schemes may be read from stored information, such as in a look up table.

The simultaneous switching scheme applied may be that for a stationary vector preceding the current demand vector.

In the present disclosure, low output frequency means an output frequency between 0 Hz and 10 Hz and more particularly between 0 Hz and 2 Hz.

In one embodiment, the power conversion system is a three-phase power conversion system, and each phase of the inverter switching network comprises two inverter switches. There are six stationary active vectors around the periphery and two stationary zero vectors at an origin and there are six simultaneous switching schemes.

For each simultaneous switching scheme, phase voltages of equal magnitude may be generated. Different magnitudes of phase voltages may be applied between different simultaneous switching schemes.

A power conversion system is also provided comprising: a DC source; an inverter coupled to the DC source and configured to receive the DC power, the inverter comprising one or more AC terminals for supplying AC power at an output frequency and an inverter switching network comprising a plurality of inverter switches for converting the DC power to the AC power; and a switch controller arranged to apply control signals to the inverter switching network in accordance with a selected switching sequence, wherein the switch controller is arranged to apply a switching sequence corresponding to a desired sector of a switching scheme in which a demand vector is currently located, the switching scheme corresponding to the demand vector in a space vector modulation scheme having stationary active vectors around the periphery and a stationary zero vector at an origin; wherein the switch controller is arranged to store simultaneous switching schemes in which, for a single switching cycle, a switch in each of at least two phases of the inverter switching network is switched simultaneously from a first state to a second state with a corresponding switch in at least one other phase of the inverter switching network being in a given state and the switch in each of the at least two phases is switched simultaneously from the second state to the first state with the switch in the at least one other phase being in the given state; and wherein the switch controller is arranged, at low frequency, to apply a simultaneous switching sequence by applying a first of the simultaneous switching schemes in dependence on the position of the demand vector in relation to the stationary active vectors.

A switch controller for a power conversion system is also provided, the power conversion system comprising a DC source and an inverter coupled to the DC source and configured to receive the DC power, the inverter comprising one or more AC terminals for supplying AC power at an output frequency and an inverter switching network comprising a plurality of inverter switches for converting the DC power to the AC power; the switch controller being arranged, in use, to apply control signals to an inverter switching network in accordance with a selected switching sequence, wherein the switch controller is arranged to apply a switching sequence corresponding to a desired sector of a switching scheme in which a demand vector is currently located, the switching scheme corresponding to the demand vector in a space vector modulation scheme having stationary active vectors around the periphery and a stationary zero vector at an origin; wherein the switch controller is arranged to store simultaneous switching schemes in which, for a single switching cycle, a switch in each of at least two phases of the inverter switching network is switched simultaneously from a first state to a second state with a corresponding switch in at least one other phase of the inverter switching network being in a given state and the switch in each of the at least two phases is switched simultaneously from the second state to the first state with the switch in the at least one other phase being in the given state; and wherein the switch controller is arranged, at low frequency, to apply a simultaneous switching sequence by applying a first of the simultaneous switching schemes in dependence on the position of the demand vector in relation to the stationary active vectors. Features and advantages described in relation to one aspect of the described technique may also be applicable to another aspect of the described technique.

**Brief Description of the Drawings**

Prior art arrangements have already been described with reference to accompanying Figures 1 to 8, in which:

**Figure 1** shows a three phase inverter according to the prior art;

**Figure 2** shows a voltage switching hexagon for the three phase inverter of Figure 1; and

**Figure 3** shows an example of space vector modulation over two switching periods according to the prior art.

**Figure 4** shows an example of D and Q axis components of the desired output voltage for two output wave cycles versus output voltage angle according to the prior art.

**Figure 5** shows an example of D and Q axis components of the desired output voltage as plotted on the X and Y axis according to the prior art.

**Figure 6** shows an example of phase voltages (with respect to half dc bus) with symmetric switching ($t\_0 = t\_3$)

versus output voltage angle according to the prior art.

**Figure 7**     shows an example of the resulting line to line voltage as seen by the motor load according to the prior art.

**Figure 8**     is a D, Q plot showing the per phase vector voltages Vu, Vv and Vw and resulting output vector (in bold);

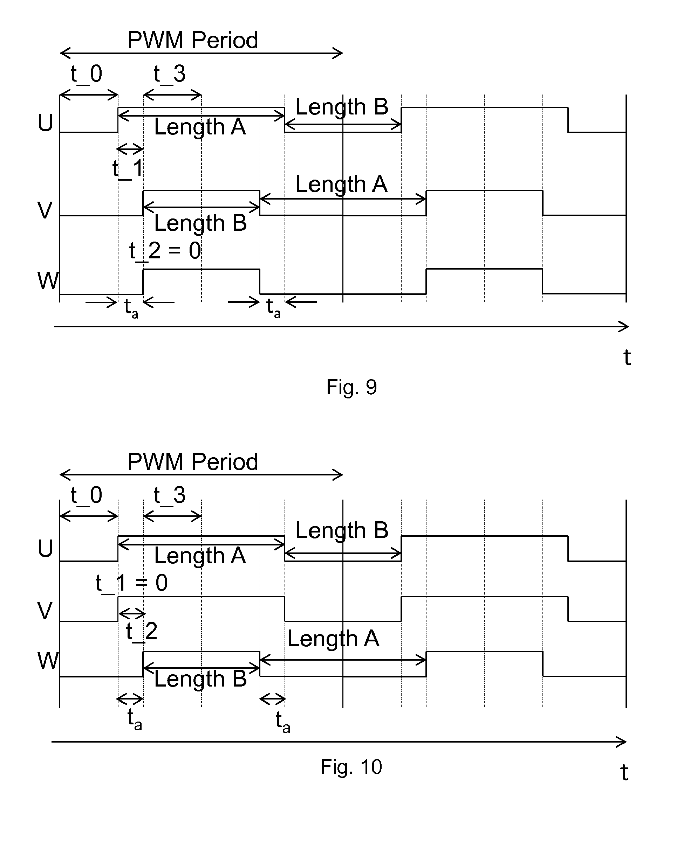

The technique will now be further described, by way of example only, with reference to accompanying Figures 9 to 23, in which:

**Figure 9**     shows an example of space vector modulation over two switching periods according to an embodiment of the disclosure;

**Figure 10**    shows an example of space vector modulation over two switching periods according to an embodiment of the disclosure;

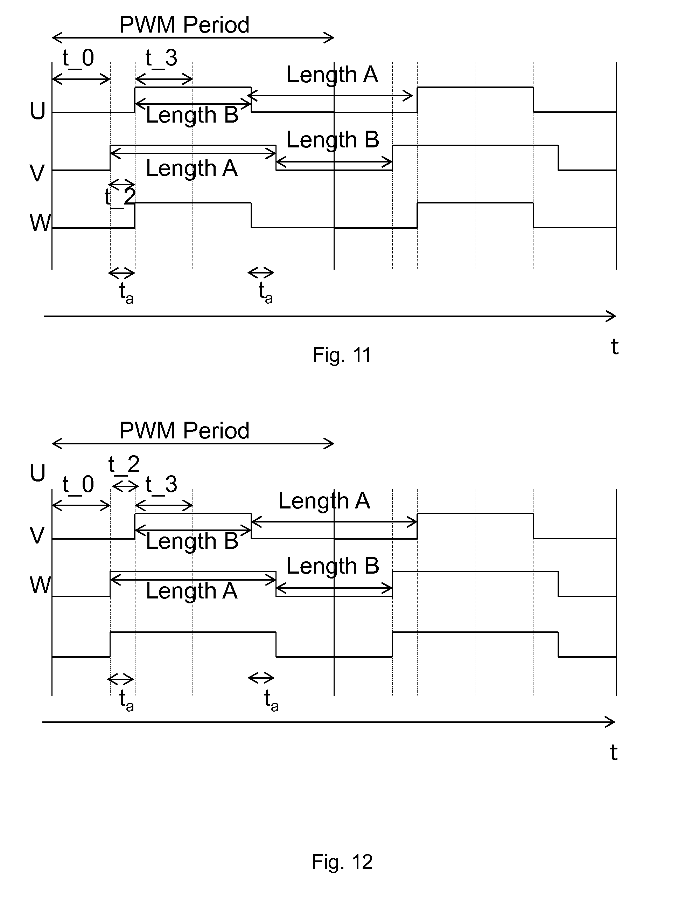

**Figure 11**    shows an example of space vector modulation over two switching periods according to an embodiment of the disclosure;

**Figure 12**    shows an example of space vector modulation over two switching periods according to an embodiment of the disclosure;

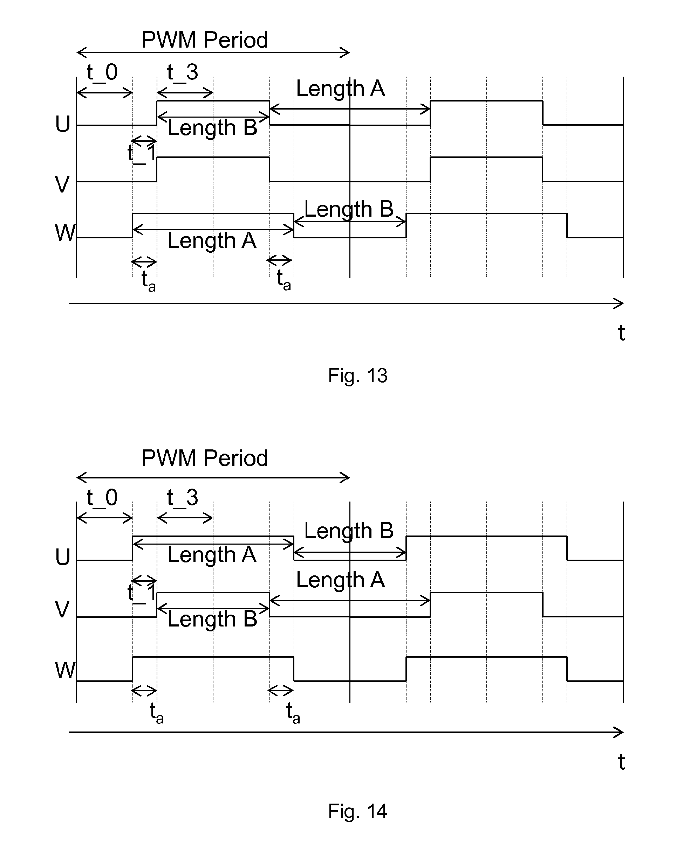

**Figure 13**    shows an example of space vector modulation over two switching periods according to an embodiment of the disclosure;

**Figure 14**    shows an example of space vector modulation over two switching periods according to an embodiment of the disclosure;

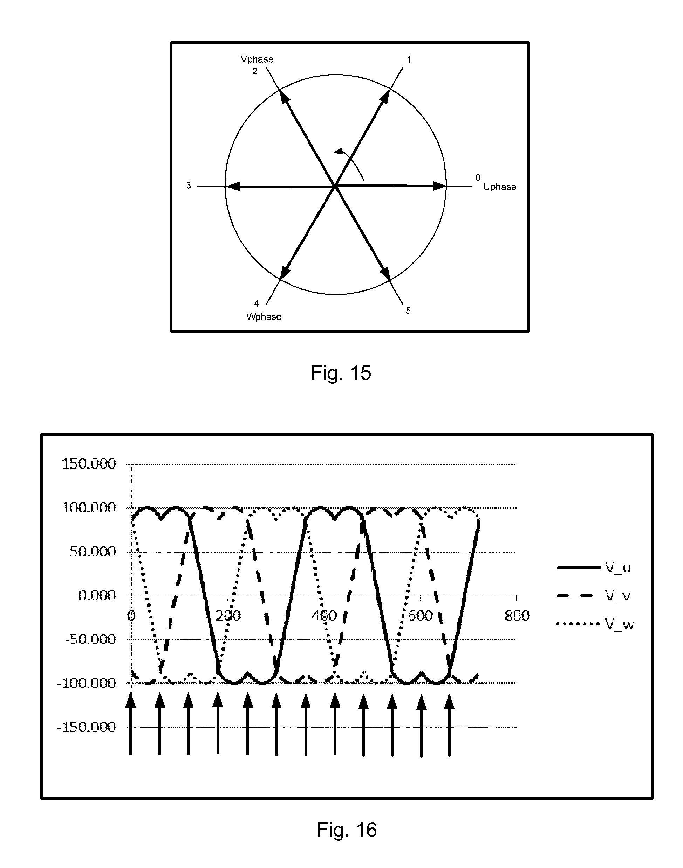

**Figure 15**    shows the simultaneous switching vectors (numbered 0 to 6) on a D, Q plot;

**Figure 16**    shows the simultaneous switching vectors (indicated by arrows) for two cycles of the output voltage wave;

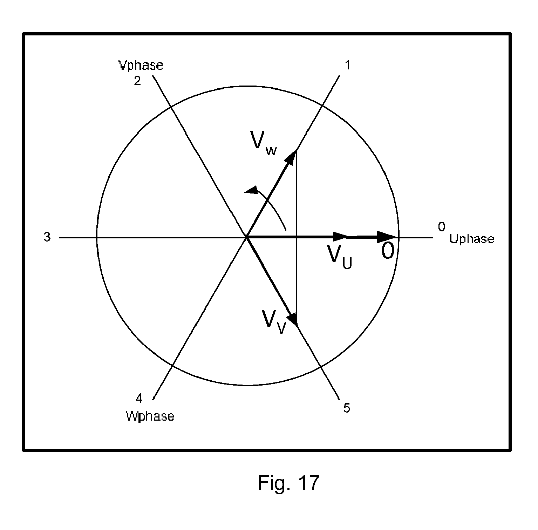

**Figure 17**    shows how the per phase vector voltages result in the simultaneous switching vector 0;

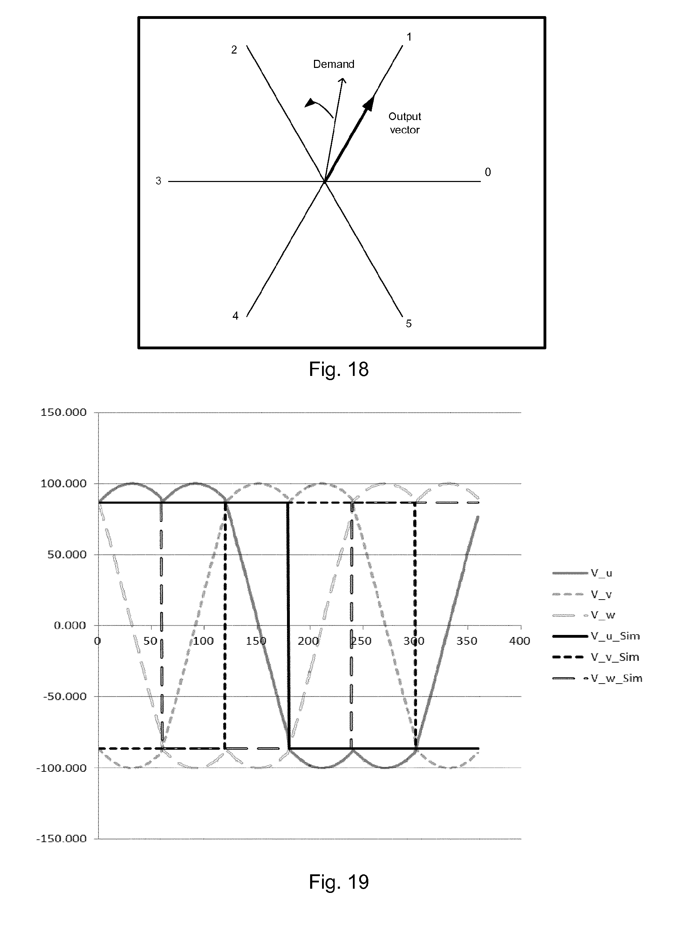

**Figure 18**    shows the simultaneous switching vectors on a D, Q plot showing the demand vector and the selected simultaneous switching vectors according to an embodiment of the disclosure;

**Figure 19**    shows the quantisation of the phase line-to-line voltages and the original demand over two electrical cycles according to the embodiment of Figure 19;

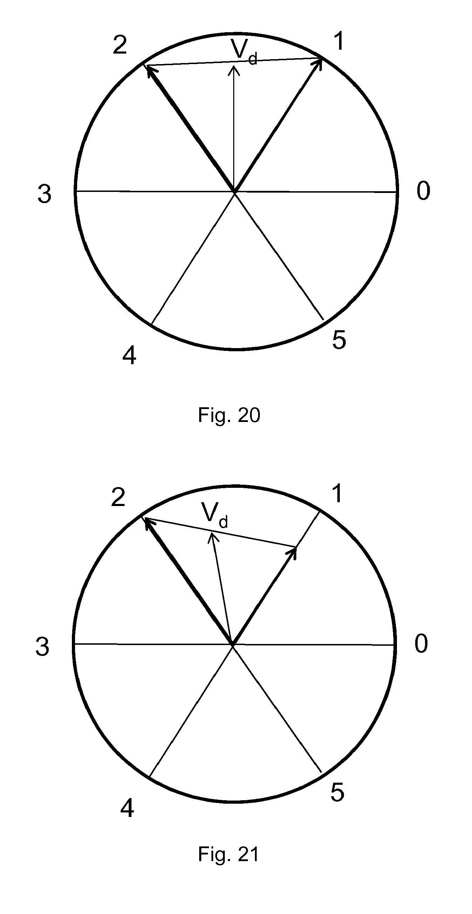

**Figure 20**    shows the simultaneous switching vectors on a D, Q plot showing the demand vector and the selected simultaneous switching vectors according to a further embodiment of the disclosure;

**Figure 21**    shows the simultaneous switching vectors on a D, Q plot showing the demand vector and the selected simultaneous switching vectors according to a further embodiment of the disclosure;

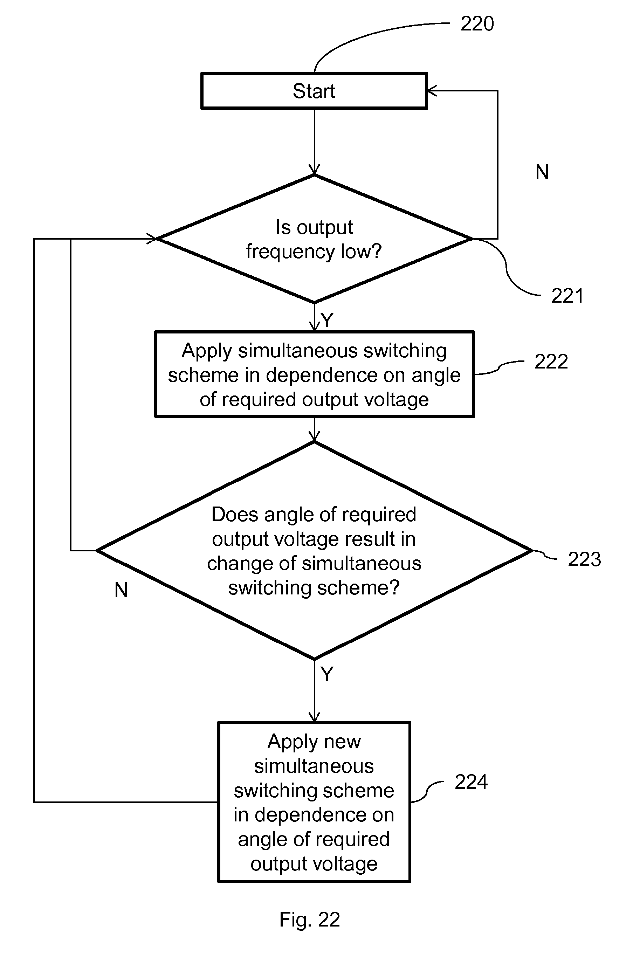

**Figure 22**    shows a flow diagram for controlling the three phase inverter according to an embodiment of the disclosure; and

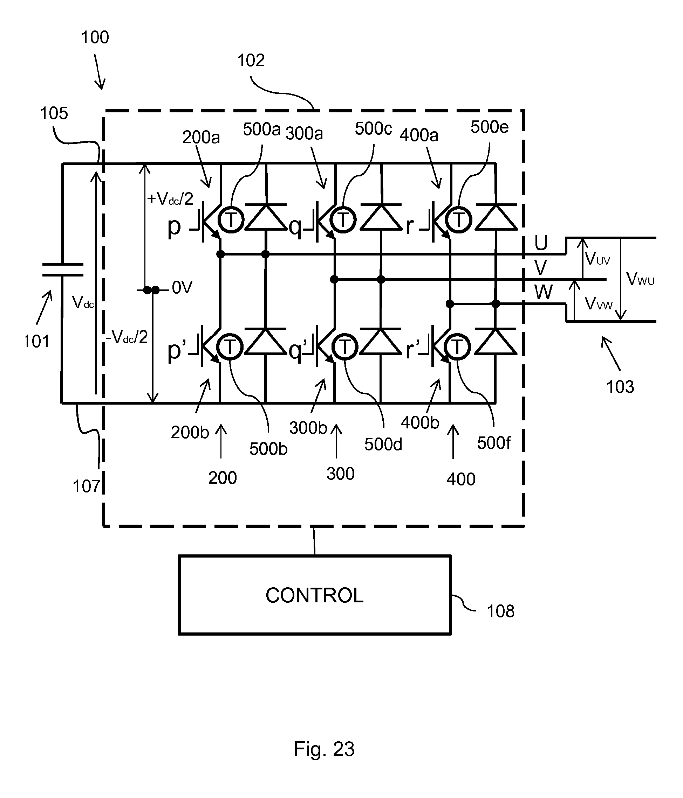

**Figure 23**    shows a three phase inverter according to an embodiment of the disclosure.

## Detailed Description

For power converters, such as that shown in Figure 1, at low output frequencies (such as output frequencies less than around 2Hz) the switch control timing patterns change relatively slowly and the temperature of any individual switch 200a, 200b, 300a, 300b, 400a, 400b can become excessive. The proposed technique uses, at low frequencies, specific space vector modulation timing patterns which are called herein "simultaneous switching" vector timing patterns or "simultaneous switching schemes". These timing patterns result in an output voltage angle quantised to vector positions where the semiconductor switches stresses are the most balanced. Typically the switching in two phases occurs simultaneously (i.e. t_1 = 0 or t_2 = 0). The magnitude of the voltage in each phase is also equal in each simultaneous switching scheme.

Simultaneous switching vector angles will now be described. At low output frequencies i.e. those in the order of tens of Hertz or less (e.g. less than around 2Hz), the output voltage angle can be quantised to positions in the wave where no single switch (e.g. an IGBT) is under peak stress. This aims to avoid vectors where a switch in one phase conducts for longer than a switch in the other phases, including the angle where the voltage is aligned with a particular phase where the ON time of the particular phase switch can be up to twice that of the other phases.

Figure 9 shows one of the "simultaneous switching" vector timing patterns. This is for switching vector V1 {100}. The V and W phase upper and lower switching devices are switched simultaneously (t_2 equals zero) in both switching directions. That is to say in the switching pattern shown, a switch in each of at least two phases is switched from a first state to a second state at the same time. The switch in each of the at least two phases may also be switched from the second state to the first state at the same time. In the active period $t_a$, the U phase switching device gating pattern approximates the inverse of both the V and W phase switching device gating patterns. In this case, in half a PWM period, the active period $t_a$ is equal to t_1 as t_2 is equal to zero and the inactive period is equal to t_0 plus t_3.

For symmetrical switching (where t_0 equals t_3 in figure 9) length A is equal to length B plus the active periods 2*(t_1) (neglecting dead times). That is to say, for a single PWM switching period, the length of time for which one switch (say the upper switch) of phase U is in a high state is equal to the length of time that the corresponding switches (i,e the upper switch) in the two phases V and W are in a high state plus the active periods 2*(t_1) or vice versa i.e. for a single PWM switching period, the length of time for which two switches (say the upper switch) in the two phases V and W are in a high state is equal to the period in which the corresponding switch (i.e. the upper switch) of phase U is in a high state plus the active periods 2*(t_1).

Figure 10 shows another of the "simultaneous switching" vector timing patterns. This is for switching vector V2 {110}. The U and V phase upper and lower switching devices are switched simultaneously as t_1 equals zero. The active period of the W phase switching device gating pattern is the inverse of that of both the U and V phase. In this case, in half a PWM period, the active period is equal to t_2 as t_3 is equal to zero and the inactive period is equal to t_0 plus t_3.

There are six "simultaneous switching" vector timing patterns per electrical cycle as there are three phase switching orders each of which can have either t_1 or t_2 equal to zero.

| Angle | Vector number | Duty | | | Polarity wrt Vdc/2 | | |
|---|---|---|---|---|---|---|---|
| | | U | V | W | U | V | W |
| 0 | 0 | High | Low | Low | + | - | - |
| 60 | 1 | High | High | Low | + | + | - |
| 120 | 2 | Low | High | Low | - | + | - |
| 180 | 3 | Low | High | High | - | + | + |
| 240 | 4 | Low | Low | High | - | - | + |
| 300 | 5 | High | Low | High | + | - | + |

In the technique described, the magnitude of Vs is controlled by the ratio of V0 (or V7) and the magnitudes of Vu, Vv and Vw are equal (although they may be of different signs).

Thus, neglecting dead-times, two upper switches (200a, 300a, 400a) and one lower switch (200b, 300b, 400b) will switch simultaneously and the other one upper switch and two lower switches will switch simultaneously. This results in similar stress on each set of three IGBTs (given the reduced effect of current lag at very low output frequency).

Figure 11 shows the "simultaneous switching" vector timing pattern for switching vector V3 {010}.

Figure 12 shows the "simultaneous switching" vector timing pattern for switching vector V4 {011}.

Figure 13 shows the "simultaneous switching" vector timing pattern for switching vector V5 {001}.

Figure 14 shows the "simultaneous switching" vector timing pattern for switching vector V6 {101}.

As will be appreciated, the switching timing pattern for each upper switch 200a, 300a, 400a may be the inverse of the switching patterns shown and the switching function for each lower switch 200b, 300b, 400b will be the inverse of the corresponding upper switch.

Figure 15 illustrates six simultaneous switching vector angles (numbered 0 to 5) on a D, Q plot for a three phase drive. Figure 15 also shows the per phase vector directions.

Figure 16 shows the simultaneous switching vector angle (shown by the arrows) for two cycles of the phase output voltage wave. Figure 16 shows two cycles of the phase output voltage waves when the six simultaneous switching vector angles as shown in Figure 15 are used. There are six vector angles at which all phases switch in a simultaneous manner, from zero angle in 60 degree steps.

Figure 17 is a D,Q plot showing the simultaneous switching vectors (numbered 0 to 5 and as shown in Figures 9 to 14 respectively). Figure 17 shows how the per phase vector voltages Vu, Vv and Vw result in the "Simultaneous switching" vector 0 (in bold). Notice that each of the per phase voltages Vu, Vv and Vw is the same length (i.e. the same magnitude) so the IGBT conduction times are balanced.

Thus the switch controller 108 is arranged to store simultaneous switching schemes comprising, for a single switching cycle, an active period in which at least two phases are in a first state and at least one phase is in a second state, and in which the at least two phases are switched substantially simultaneously from the first state to the second state with the at least one phase remaining in the second state and in which the at least two phases are switched substantially simultaneously from the second state to the first state with the at least one phase remaining in the second state (as shown in Figures 9, 11 and 13) and simultaneous switching schemes comprising, for a single switching cycle, an inactive period in which the phases are in a first state, and in which at least two phases are switched simultaneously from the first state to the second state with at least one phase being in the first state and in which the at least two phases are switched substantially simultaneously from the second state to the first state with the at least one phase being in the first state (as shown in Figures 10, 12 and 14). The magnitudes of the voltages in each phase are the same for a given simultaneous switching scheme but may differ between simultaneous switching schemes.

Thus a plurality of simultaneous switching schemes are stored in which a switch in each of at least two phases of the inverter switching network is switched substantially simultaneously from a first state to a second state with a corresponding switch in at least one other phase of the inverter switching network not being switched at the same time and in which the switch in each of the at least two phases is switched simultaneously from the second state to the first state with the switch in the at least one other phase not being switched at the same time.

These simultaneous switching schemes are applied at low frequency, with the magnitudes of the voltages in each phase being the same for a given simultaneous switching scheme, so providing balanced switch conduction times. Control signals are applied to the inverter switching network in accordance with a selected switching sequence, wherein a switching sequence is applied corresponding to a desired sector of a switching scheme in which a demand vector is currently located, the switching scheme corresponding to the demand vector in a space vector modulation scheme having stationary active vectors around the periphery and a stationary zero vector at an origin.

Three related methods are presented in this document that all share the same basic principal. All methods use the "simultaneous switching" vector timing patterns but have varying computational requirements and angular quantisation.

Method one - Simple selection method with largest angle of quantisation

This method requires the lowest amount of computation but results in the largest quantisation steps in the output voltage vector position and hence a trapezoidal voltage which can result in a large current and torque ripple.

Figure 18 shows "Simultaneous switching" vector angles (numbered 0 to 5) on a D,Q plot showing the demand vector and the selected "simultaneous switching" vector in bold. In this first embodiment, the selected "simultaneous switching" vector is the one that occurs before the demand voltage.

Figure 19 shows, over two electrical cycles, the quantisation of the phase line to line voltages (shown in bold line) and the original demand (in lighter line) for such an embodiment.

As the demand vector angle rotates, the actual output voltage vector moves from one of the six "simultaneous switching" vectors to the next. The change occurs only when the demand passes the "simultaneous switching" vector to avoid oscillation at standstill (0Hz). For instance, when the demand vector angle is between 1 and 60 degrees, the control signal to the inverter switching network is as shown in Figure 9. When the demand vector angle is between 61 and 120 degrees, the control signal to the inverter switching network is as shown in Figure 10. When the demand vector angle is between 121 and 180 degrees, the control signal to the inverter switching network is as shown in Figure 11. When the demand vector angle is between 181 and 240 degrees, the control signal to the inverter switching network is as shown in Figure 12. When the demand vector angle is between 241 and 300 degrees, the control signal to the inverter switching network is as shown in Figure 13. When the demand vector angle is between 301 and 360 degrees, the control signal to the inverter switching network is as shown in Figure 14.

The method may be extended to extra low frequency (<0.1Hz) and at 0Hz to reduce the conduction time of individual IGBTs. This may be achieved by omitting the "simultaneous switching" vectors during which the hottest IGBT would be switched for longer than its complementary lower IGBT. This method may result in a changing voltage vector output, even at zero demand frequency, as different IGBTs become the hottest. A time constant (e.g. one second) and a temperature hysteresis may be used.

According to this first embodiment, at low frequencies the switching patterns shown in Figure 9 to 14 are use consecutively based on the demand voltage with switching between the switching patterns occurring once the demand has passed the current "simultaneous switching" vector. As will be appreciated, this results in a relatively course quantisation but at low frequencies this may be sufficient to avoid over-heating of the switches involved while still providing a low frequency output.

Method two - Enhanced vector and pattern selection based on time slots

This method requires a medium amount of computation and reduces the size of the angular quantisation steps.

According to this second embodiment, an average voltage vector angle is produced between the "simultaneous switching" vectors while still only using voltage "simultaneous switching" vector timing patterns. This is achieved by using an alternating pattern to select between the two "simultaneous switching" vectors bounding the 60 degree sector in which the demand output vector angle is situated.

The alternating pattern is provided over a set period with the ratio of the number of each of the two boundary "simultaneous switching" vectors being proportional to the output vector angle within the 60 degree sector.

According to this second embodiment, the output vector is alternated between two of the "simultaneous switching" vectors. The ratio of the number of each of the two boundary "simultaneous switching" vectors applies is proportional to the output vector angle within the 60 degree sector.

Consider the simple case shown in Figure 20 where the demand output voltage vector $V_d$ is at the angle shown by the arrow - half-way through the 60 degree sector between vector 1 and vector 2.

In contrast to the first embodiment discussed in relation to Figures 18 and 19, in this second embodiment, the demand vector is produced by alternating between the "simultaneous switching" vectors 1 and 2, shown in the diagram. For the angle shown in Figure 20 (half way through the 60 degree sector), the alternating occurs with a 1:1 ratio. Notice that the resulting "demand vector" will be smaller in magnitude than the "simultaneous switching" vectors so the magnitude of vectors 1 and 2 may be increased to compensate. Figure 20 illustrates the demand vector resulting from the example above.

The "simultaneous switching" vectors used can be selected as the demand vector passes a "simultaneous switching" vector, which is similar to the first method described above. The pattern of alternating "simultaneous switching" vectors and the size compensation can be provided using a simple look up table.

The quantisation of the additional vectors which can be produced by this method depends on the PWM switching period and the time period over which the additional vectors are produced. For example, at a 16kHz switching frequency (PWM Period = 62.5us) there are 16 cycles in a 1ms pattern period where the output vector is alternated between two of the "simultaneous switching" vectors. So (for a switching cycle of 16kHz) that there are 8 of each in the 1 ms period.

According to this second embodiment, at low frequencies two consecutive simultaneous switching patterns (for instance those shown in Figures 9 to 14) are used alternately within a 60 degree sector based on the demand voltage. Switching between the switching patterns occurs once the demand has passed the current "simultaneous switching" vector. As will be appreciated, this results in a finer quantisation than the first method and at low frequencies this may be sufficient to avoid over-heating of the switches involved while still providing a low frequency output signal.

An embodiment might use a pattern that spends the smallest amount of consecutive switching period slices on either of the "simultaneous switching" vectors to reduce the ripple. For instance, when the output vector angle is 30 degrees between vector 1 and vector 2 (as shown in Figure 20), the switching timing patterns applied alternately are those shown in Figures 10 and 11. The device may switch between these such that each is used for the same amount of time during the 60 degree sector (e.g. 1,2, 1,2, 1,2),

Alternatively, if the temperature of one of the switches is significantly higher than the temperature of the other switches, the way in which the timing patterns are applied may be changed accordingly. For instance, say the upper switch in phase U is hotter than the other switches. In the active period t_2 of the switching pattern shown in Figure 10 the upper switches in phases U and V are on. In the active period t_2 of the switching pattern shown in Figure 11 only the upper switch in phase V is on. The device may therefore switch between these two, favouring the switching pattern shown in Figure 11 before that shown in Figure 10 so that the upper switch in phase U has the opportunity to cool down. The device may therefore alternate between these vectors in the following manner for instance: 2, 2, 2, 2, 2, 1, 1, 1, 1, 1. The ratio remains the same (1:1) but the switching patterns are applied in a different order. Other methodologies may be applied e.g. 2, 2, 1, 2, 2, 1, 2, 1, 1, 1, etc.

The pattern of alternating "simultaneous switching" vectors and the size compensation can be provided using a simple look up table. The level of quantisation may also be selected and a relevant look up table used.

In this second embodiment, an average voltage vector angle is produced between the "simultaneous switching" vectors while still only using voltage "simultaneous switching" vector timing patterns. This is achieved by using an alternating pattern to select between the two "simultaneous switching" vectors bounding the 60 degree sector in which the demand output vector angle is situated. The magnitudes of the "simultaneous switching" vectors are identical.

## Method three - Enhanced vector and pattern selection based on ratio of vector lengths

This method requires the highest amount of computation but can provide a very small quantisation step in the average output voltage vector.

According to this third embodiment, alternating "simultaneous switching" vectors are used with unequal magnitudes to produce an average vector of an angle between the "simultaneous switching" vectors used. Figure 21 illustrates the average demand vector produced using alternative "simultaneous switching" vectors with unequal magnitudes i.e. for each simultaneous switching vector the magnitude of the voltage in each phase is equal but the magnitude of the phase voltage may differ between simultaneous switching vectors.

The method uses one of the "simultaneous switching" vectors to define a d-axis to reduce computation. The other "simultaneous switching" vector is thus at 60 degree to this defined d-axis.

The demand vector is converted into the d and q components. These components are then used to provide magnitudes for the two "simultaneous switching" vectors, R and S which are applied as discussed above in relation to the second embodiment.

$$|R| = \frac{4 * Demand_Q}{\sqrt{3}}$$

$$|S| = (2 * Demand_D) - \left(\frac{2 * Demand_Q}{\sqrt{3}}\right)$$

The equations above produce the vector length (i.e. magnitude) for the alternating "simultaneous switching" vectors, R and S. The d-axis is set to the angle of vector R. The table below gives the "simultaneous switching" vector magnitudes in steps of one degree through the sector bounded by the "simultaneous switching" vectors R and S.

| Demand angle from R | Demand length | Demand_d | Demand_q | Magnitude S | Magnitude R |
|---|---|---|---|---|---|
| 1 | 1 | 1.00 | 0.02 | 0.04 | 1.98 |
| 2 | 1 | 1.00 | 0.03 | 0.08 | 1.96 |
| 3 | 1 | 1.00 | 0.05 | 0.12 | 1.94 |
| 4 | 1 | 1.00 | 0.07 | 0.16 | 1.91 |
| 5 | 1 | 1.00 | 0.09 | 0.20 | 1.89 |
| 6 | 1 | 0.99 | 0.10 | 0.24 | 1.87 |
| 7 | 1 | 0.99 | 0.12 | 0.28 | 1.84 |
| 8 | 1 | 0.99 | 0.14 | 0.32 | 1.82 |
| 9 | 1 | 0.99 | 0.16 | 0.36 | 1.79 |
| 10 | 1 | 0.98 | 0.17 | 0.40 | 1.77 |
| 11 | 1 | 0.98 | 0.19 | 0.44 | 1.74 |
| 12 | 1 | 0.98 | 0.21 | 0.48 | 1.72 |
| 13 | 1 | 0.97 | 0.22 | 0.52 | 1.69 |
| 14 | 1 | 0.97 | 0.24 | 0.56 | 1.66 |
| 15 | 1 | 0.97 | 0.26 | 0.60 | 1.63 |
| 16 | 1 | 0.96 | 0.28 | 0.64 | 1.60 |
| 17 | 1 | 0.96 | 0.29 | 0.68 | 1.58 |
| 18 | 1 | 0.95 | 0.31 | 0.71 | 1.55 |
| 19 | 1 | 0.95 | 0.33 | 0.75 | 1.52 |

(continued)

| Demand angle from R | Demand length | Demand_d | Demand_q | Magnitude S | Magnitude R |
|---|---|---|---|---|---|
| 20 | 1 | 0.94 | 0.34 | 0.79 | 1.48 |
| 21 | 1 | 0.93 | 0.36 | 0.83 | 1.45 |
| 22 | 1 | 0.93 | 0.37 | 0.87 | 1.42 |
| 23 | 1 | 0.92 | 0.39 | 0.90 | 1.39 |
| 24 | 1 | 0.91 | 0.41 | 0.94 | 1.36 |
| 25 | 1 | 0.91 | 0.42 | 0.98 | 1.32 |
| 26 | 1 | 0.90 | 0.44 | 1.01 | 1.29 |
| 27 | 1 | 0.89 | 0.45 | 1.05 | 1.26 |
| 28 | 1 | 0.88 | 0.47 | 1.08 | 1.22 |
| 29 | 1 | 0.87 | 0.48 | 1.12 | 1.19 |
| 30 | 1 | 0.87 | 0.50 | 1.15 | 1.15 |
| 31 | 1 | 0.86 | 0.52 | 1.19 | 1.12 |
| 32 | 1 | 0.85 | 0.53 | 1.22 | 1.08 |
| 33 | 1 | 0.84 | 0.54 | 1.26 | 1.05 |
| 34 | 1 | 0.83 | 0.56 | 1.29 | 1.01 |
| 35 | 1 | 0.82 | 0.57 | 1.32 | 0.98 |
| 36 | 1 | 0.81 | 0.59 | 1.36 | 0.94 |
| 37 | 1 | 0.80 | 0.60 | 1.39 | 0.90 |
| 38 | 1 | 0.79 | 0.62 | 1.42 | 0.87 |
| 39 | 1 | 0.78 | 0.63 | 1.45 | 0.83 |
| 40 | 1 | 0.77 | 0.64 | 1.48 | 0.79 |
| 41 | 1 | 0.75 | 0.66 | 1.52 | 0.75 |
| 42 | 1 | 0.74 | 0.67 | 1.55 | 0.71 |
| 43 | 1 | 0.73 | 0.68 | 1.58 | 0.68 |
| 44 | 1 | 0.72 | 0.69 | 1.60 | 0.64 |
| 45 | 1 | 0.71 | 0.71 | 1.63 | 0.60 |
| 46 | 1 | 0.69 | 0.72 | 1.66 | 0.56 |
| 47 | 1 | 0.68 | 0.73 | 1.69 | 0.52 |
| 48 | 1 | 0.67 | 0.74 | 1.72 | 0.48 |
| 49 | 1 | 0.66 | 0.75 | 1.74 | 0.44 |
| 50 | 1 | 0.64 | 0.77 | 1.77 | 0.40 |
| **51** | **1** | **0.63** | **0.78** | **1.79** | **0.36** |
| 52 | 1 | 0.62 | 0.79 | 1.82 | 0.32 |
| 53 | 1 | 0.60 | 0.80 | 1.84 | 0.28 |
| 54 | 1 | 0.59 | 0.81 | 1.87 | 0.24 |
| 55 | 1 | 0.57 | 0.82 | 1.89 | 0.20 |
| 56 | 1 | 0.56 | 0.83 | 1.91 | 0.16 |
| 57 | 1 | 0.54 | 0.84 | 1.94 | 0.12 |

(continued)

| Demand angle from R | Demand length | Demand_d | Demand_q | Magnitude S | Magnitude R |
|---|---|---|---|---|---|
| 58 | 1 | 0.53 | 0.85 | 1.96 | 0.08 |
| 59 | 1 | 0.52 | 0.86 | 1.98 | 0.04 |

For instance, if the demand vector is at an angle of 51 degrees from the switching vector R, then the control 108 applies switching vector S with phase magnitude of 1.79 and switching vector R with phase magnitude of 0.36. Simultaneous switching vectors R and S may be applied once each or may be applied in an alternating pattern e.g. R-S-R-S-R-S-R-S etc. with the appropriate phase voltage magnitudes. This information may be stored and the sequence of application of the first and second simultaneous switching schemes may be read from stored information. For instance, a per unit look-up table can be used to reduce computation.

Figure 22 is a flow diagram for controlling a three phase inverter according to an embodiment of the disclosure. The process starts at operation 220. Firstly it is determined whether the required output voltage frequency of the power conversion system is low, operation 221. In this context low output frequency means lower than 10Hz, and in particular lower than 2Hz (including 0Hz). If the answer is no, then the process returns to the start, operation 220. If the answer to operation 221 is yes, then the process proceeds to operation 222 and applies the simultaneous switching scheme determined by the angle of the required output voltage. For instance, as described above with reference to the first method described and Figures 9 and 17, the simultaneous switching scheme 0 shown in Figure 9 is applied when the angle of the required output voltage is between 1 and 60 degrees, with the other simultaneous switching schemes 1 to 5 (shown in Figures 10 to 14 respectively) being applied when the angle of the required output voltage is as discussed above. At operation 223, a determination is made whether the angle of required output voltage results in a change of the simultaneous switching scheme. If operation 223 is answered in the negative, the process returns to operation 221. If the operation 223 is answered in the affirmative, then the new simultaneous switching scheme is applied in dependence on the angle of the required output voltage. The process then returns to operation 221.

The technique as described herein aims to provide thermal control based on the space vector selection. This thermal control is provided to postpone the current rating reduction necessary at low output frequencies. The technique uses specific output voltage vectors (called the "simultaneous switching" vectors) which result in an output voltage angle quantised to vector positions where the semiconductor switches stresses are the most balanced. For each simultaneous switching vector (or simultaneous switching scheme), the magnitude of voltage in each phase is the same in a given PWM switching cycle i.e. the magnitude of voltage in phase U is the same as that in phase V and is the same as in phase W.

Prior art methods simply reduce the current rating when the drive is supply a low output frequency. The technique postpones, or removes, the requirement to reduce the current rating at low output frequencies. Ultimately, the technique reduces the probability of the drive tripping as a result of excessive inverter temperature.

Figure 23 shows a three phase inverter according to an embodiment of the disclosure. As with Figure 1, Figure 23 shows a three phase power inverter 100 for converting a DC power supply 101 to an AC output 103 which may then be connected to a motor load. The inverter comprises an inverter switching network comprising three separate phases 200, 300, 400. Each phase includes two switches in series: 200a, 200b in phase 200; 300a, 300b in phase 300; and 400a, 400b in phase 400. Switches 200a, 300a and 400a are connected to the positive rail 105 (and may be referred to as the "upper" switches) and switches 200b, 300b and 400b are connected to the negative rail 107 (and may be referred to as the "lower" switches). In Figure 8, each switch is an IGBT (insulated gate bipolar transistor). However, any switches with fast switching capability may be used.

Figure 23 also shows temperature sensors 500a, 500b, 500c, 500d, 500e and 500f for sensing the temperature of the associated switch 200a, 200b, 300a, 300b, 400a, 400b. These temperature sensors may be any sensor suitable to sense the temperature of the individual switch 200a, 200b, 300a, 300b, 400a, 400b. For instance the temperature sensors 500 may comprise a thermocouple placed close to each switch 200a, 200b, 300a, 300b, 400a, 400b on the associated PCB. As described above, the simultaneous switching scheme applied may be altered in dependence on the temperature sensed by an individual temperature sensor. For example, a simultaneous switching scheme that involves a switch that is overheated may be omitted.

The techniques describes involves the storing of a plurality of simultaneous switching schemes in which a switch in each of at least two phases of the inverter switching network is switched substantially simultaneously from a first state to a second state (allowing for dead time to prevent short-circuiting). Not all of the phases are switched simultaneously. At the time of switching the switches in the at least two phases from a first state to a second state, at least one other phase of the inverter switching network is in a given state i.e. the other phase is not switched at the same time. Similarly when the switch in each of the at least two phases are switched simultaneously from the second state to the first state the switch in the at least one other phase is in a given state.

In the foregoing specification, techniques have been described with reference to specific embodiments thereof. It will, however, be evident that various modifications and changes may be made thereto without departing from the scope of the technique. The specification and drawings are, accordingly, to be regarded in an illustrative rather than a restrictive sense.

It is to be noted that the methods as described have actions being carried out in a particular order. However, it would be clear to a person skilled in the art that the order of any actions performed, where the context permits, can be varied and thus the ordering as described herein is not intended to be limiting.

It is also to be noted that where a method has been described it is also intended that protection is also sought for a device arranged to carry out the method and where features have been claimed independently of each other these may be used together with other claimed features.

Embodiments have been described herein in relation to IGBT switches. However the method and apparatus described are not intended to be limited to these types of switches but may be applicable to other switches.

**Claims**

1. A method of driving a power conversion system, the power conversion system comprising a DC source and an inverter coupled to the DC source and configured to receive DC power from the DC source, the inverter comprising one or more AC terminals for supplying AC power at an output frequency and an inverter switching network comprising a plurality of inverter switches for converting the DC power to the AC power; the method comprising:

   applying control signals to the inverter switching network in accordance with a selected switching sequence, wherein a switching sequence is applied corresponding to a desired sector of a switching scheme in which a demand vector is currently located, the switching scheme corresponding to the demand vector in a space vector modulation scheme having stationary active vectors around the periphery and a stationary zero vector at an origin;
   storing a plurality of simultaneous switching schemes in which, for a single switching cycle, a switch in each of at least two phases of the inverter switching network is switched simultaneously from a first state to a second state with a corresponding switch in at least one other phase of the inverter switching network being in a given state and in which the switch in each of the at least two phases is switched simultaneously from the second state to the first state with the switch in the at least one other phase being in the given state; and
   at low output frequency, applying a simultaneous switching sequence by applying a first of the simultaneous switching schemes in dependence on the position of the demand vector in relation to the stationary active vectors.

2. A method as claimed in claim 1 further comprising, at low output frequency, applying a simultaneous switching sequence by applying a first and a second of the simultaneous switching schemes in dependence on the position of the demand vector in relation to the stationary active vectors.

3. A method as claimed in claim 2 further comprising alternating between the first and the second simultaneous switching schemes.

4. A method as claimed in claim 2 or 3 further comprising reading a sequence of application of the first and second simultaneous switching schemes from stored information.

5. A method as claimed in claim 4 where the information is stored in a look up table.

6. A method as claimed in claim 1 wherein the simultaneous switching scheme applied is that for a stationary vector preceding the current demand vector.

7. A method as claimed in any preceding claim wherein low output frequency means an output frequency between 0 Hz and 10 Hz.

8. A method as claimed in any preceding claim wherein low output frequency means an output frequency between 0 Hz and 2 Hz.

9. A method as claimed in any preceding claim wherein the power conversion system is a three-phase power conversion system, each phase of the inverter switching network comprises two inverter switches and there are six stationary active vectors around the periphery and two stationary zero vectors at an origin and there are six simultaneous switching schemes.

10. A method as claimed in any preceding claim further comprising generating, for each simultaneous switching scheme, phase voltages of equal magnitude.

11. A method as claimed in any preceding claim wherein different magnitudes of phase voltages are applied between different simultaneous switching schemes.

12. A power conversion system comprising:

a DC source;
an inverter coupled to the DC source and configured to receive the DC power, the inverter comprising one or more AC terminals for supplying AC power at an output frequency and an inverter switching network comprising a plurality of inverter switches for converting the DC power to the AC power; and
a switch controller arranged to apply control signals to the inverter switching network in accordance with a selected switching sequence, wherein the switch controller is arranged to apply a switching sequence corresponding to a desired sector of a switching scheme in which a demand vector is currently located, the switching scheme corresponding to the demand vector in a space vector modulation scheme having stationary active vectors around the periphery and a stationary zero vector at an origin;
wherein the switch controller is arranged to store simultaneous switching schemes in which, for a single switching cycle, a switch in each of at least two phases of the inverter switching network is switched simultaneously from a first state to a second state with a corresponding switch in at least one other phase of the inverter switching network being in a given state and the switch in each of the at least two phases is switched simultaneously from the second state to the first state with the switch in the at least one other phase being in the given state; and
wherein the switch controller is arranged, at low frequency, to apply a simultaneous switching sequence by applying a first of the simultaneous switching schemes in dependence on the position of the demand vector in relation to the stationary active vectors.

13. A switch controller for a power conversion system, the power conversion system comprising a DC source and an inverter coupled to the DC source and configured to receive the DC power, the inverter comprising one or more AC terminals for supplying AC power at an output frequency and an inverter switching network comprising a plurality of inverter switches for converting the DC power to the AC power;
the switch controller being arranged, in use, to apply control signals to an inverter switching network in accordance with a selected switching sequence, wherein the switch controller is arranged to apply a switching sequence corresponding to a desired sector of a switching scheme in which a demand vector is currently located, the switching scheme corresponding to the demand vector in a space vector modulation scheme having stationary active vectors around the periphery and a stationary zero vector at an origin;
wherein the switch controller is arranged to store simultaneous switching schemes in which, for a single switching cycle, a switch in each of at least two phases of the inverter switching network is switched simultaneously from a first state to a second state with a corresponding switch in at least one other phase of the inverter switching network being in a given state and the switch in each of the at least two phases is switched simultaneously from the second state to the first state with the switch in the at least one other phase being in the given state; and
wherein the switch controller is arranged, at low frequency, to apply a simultaneous switching sequence by applying a first of the simultaneous switching schemes in dependence on the position of the demand vector in relation to the stationary active vectors.

Fig. 1
Prior Art

V3{010}　　　　　　V2{110}

Vs

α

V0{000}　　V4 {011}　　　　　　　V1{100}
V7{111}

V5{001}　　　　　　V6{101}

Zero voltage vectors　　　　　Active voltage vectors

Fig. 2
Prior Art

PWM Period

t_0　　t_3 t_3　　t_0

$t_a$　　　　　　$t_a$

U

t_1

V

W

t_2

50% duty

t

Fig. 3
Prior Art

Fig. 4
Prior Art

Fig. 5
Prior Art

Fig. 6
Prior Art

Fig. 7
Prior Art

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

220

Start

N

Is output
frequency low?

221

Y

Apply simultaneous switching
scheme in dependence on angle
of required output voltage

222

Does angle of required
output voltage result in
change of simultaneous
switching scheme?

223

N

Y

Apply new
simultaneous
switching scheme
in dependence on
angle of required
output voltage

224

Fig. 22

Fig. 23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20120075892 A